# EUROPÄISCHE PATENTSCHRIFT

(11) **EP 1 938 539 B1**
(45) Veröffentlichungstag und Bekanntmachung des Hinweises auf die Patenterteilung: **26.06.2013**
(21) Anmeldenummer: 06778406.6
(22) Anmeldetag: 30.08.2006
(51) Int. Cl.: H04L 5/14, H04L 27/34, H04L 27/26

(54) **Verfahren und Vorrichtung zur gezielten Unterdrückung bestimmter Unterfrequenzbereiche eines Hauptfrequenzbereichs**
Method and device for targeted suppression of certain sub-frequency ranges contained in a principal frequency region
Procédé et dispositif d'atténuation ciblée des sous-domains de fréquence contenus dans une région principale de fréquence

(30) Priorität: 14.10.2005 DE 102005049260
(43) Veröffentlichungstag der Anmeldung: 02.07.2008
(73) Patentinhaber: Nokia Siemens Networks GmbH & Co. KG, 81541 München (DE)
(72) Erfinder: BEER, Andreas, A-2331 Vösendorf (AT); KOZEK, Werner, A-1220 Wien (AT); SCHÜSZLER, Bert, A-1220 Wien (AT)
(74) Vertreter: Brachmann, Roland W.
(86) Internationale Anmeldenummer: PCT/EP2006/065825
(87) Internationale Veröffentlichungsnummer: WO 2007/057243

(56) Entgegenhaltungen:
- EP-A2- 1 489 807
- WO-A-99/16224
- WO-A2-02/33925
- US-A- 5 479 447
- US-A- 5 903 608
- US-A- 6 084 917
- US-A1- 2003 048 835
- CHOW P S ET AL: "A PRACTICAL DISCRETE MULTITONE TRANSCEIVER LOADING ALGORITHM FOR DATA TRANSMISSION OVER SPECTRALLY SHAPED CHANNELS" IEEE TRANSACTIONS ON COMMUNICATIONS, Bd. 43, Nr. 2/4, PART 2, 1. Februar 1995 (1995-02-01), Seiten 773-775, XP000502585 PISCATAWAY, NJ, US ISSN: 0090-6778

## Beschreibung

Die Erfindung betrifft ein Verfahren zur Datenübertragung über eine Übertragungsstrecke, insbesondere über eine Teilnehmer-Übertragungsstrecke und insbesondere in einer Initialisierungsphase, die der Übertragung von Nutzdaten vorausgeht. Die Übertragungsstrecke ist beispielsweise eine Kupferzweidrahtleitung, wie sie bei xDSL-Verfahren (x Digital Subscriber Line) verwendet wird, insbesondere bei ADSL-Verfahren (Asymmetrical Digital Subscriber Line) und bei VDSL-Verfahren (Very High Speed Digital Subscriber Line). Aber auch andere Übertragungsstrecken, beispielsweise Funkübertragungsstrecken, werden verwendet, siehe beispielsweise die Anwendungen gemäß einem sogenannten WiMAX-Verfahren (Worldwide Interoperability for Microwave Access), die Anwendung in einem WLAN (Wireless Lokal Area Network) oder in einem UMTS-System (Universal Mobile Telecommunication System).

Insbesondere betrifft die Erfindung:
- die Verwendung von ADSL-Verfahren (Asymmetrical Digital Subscriber Line), z.B. gemäß den Standards ITU-T (International Telecommunication Union - Telecommunication Standardization Sector) G.992.x, ANSI (American National Standards Institute) Tl.413, ETGI (European Telecommunications Standards Institute) RTS TM-06006, und
- VDSL-Verfahren (Very High Digital Subscriber Line), beispielsweise gemäß den Standards ETSI TS 101 270, ITU-T 993.x, oder ANSI T1.424.

Obwohl auf den genannten Verfahren beruhende Sende-/Empfangsvorrichtungen bereits millionenfach eingesetzt werden, wie z.B. im Dokument US-6084917-A beschrieben wird, ist es dennoch Aufgabe der Erfindung, die betreffenden Vorrichtungen und Verfahren zu verbessern, insbesondere hinsichtlich der erzielbaren Reichweiten bzw. der erzielbaren Übertragungsraten und Übertragungsqualität. Insbesondere soll gewährleistet werden, dass auch bei Sende-/Empfangsvorrichtungen, bei denen keine explizite Ausnahme von Frequenzbereichen für das Senden vorgesehen ist, die genannten technischen Wirkungen erreicht werden.

Die auf das Verfahren gerichtete Aufgabe wird durch die im Patentanspruch 1 angegebenen Verfahrensschritte gelöst. Weiterbildungen sind in den Unteransprüchen angegeben.

Die Erfindung beruht auf der Überlegung, dass es erforderlich sein kann, bestimmte Frequenzbereiche eines Hauptfrequenzbereichs vom Senden auszunehmen, um eine große Datenübertragungsrate bzw. eine hohe Datenübertragungsqualität zu gewährleisten. Das Ausnehmen der Frequenzbereiche vom Senden ist beispielsweise erforderlich, wenn in diesen Bereichen Störungen vorliegen, die von anderen Übertragungsstrecken kommen. Andererseits kann das Ausnehmen der Frequenzbereiche jedoch auch erforderlich sein, um Störungen anderer Übertragungsstrecken zu vermeiden bzw. zu reduzieren. Ist eine explizite Übermittlung der auszunehmenden Frequenzbereiche an eine teilnehmerseitige oder netzseitige Sende-/Empfangsvorrichtung nicht möglich, so lässt sich dennoch eine implizite Übermittlung erreichen, wenn die auszunehmenden Frequenzbereiche der zu steuernden Send-/Empfangsvorrichtung von der steuernden Sende-/Empfangsvorrichtung als Bereiche dargestellt werden, in denen die Übertragungsstrecke verringerte oder schlechte Übertraguügseigenschaften hat. In diesem Fall nimmt die zu steuernde Sende-/Empfangsvorrichtung diese Frequenzbereiche automatisch von der Übertragung beim Senden aus.

Deshalb werden bei dem erfindungsgemäßen Verfahren die Verfahrensschritte durchgeführt, die im Unabhängigen Anspruch 1 angegeben und in den Kuteransprüchen 2-10 weiter spezifiziert sind.

Die Erfindung betrifft außerdem eine Vorrichtung gemäβ Anspruch 11 die insbesondere zur Durchführung des erfindungsgemäßen Verfahrens bzw. einer seiner Weiterbildungen verwendet wird. Damit gelten die oben genannten technischen Wirkungen auch für die Vorrichtung bzw. ihre Weiterbildungen.

Im Folgenden wird die Erfindung anhand der beiliegenden Zeichnungen erläutert. Darin zeigen:
- Figur 1: einen Frequenzbereich, der bei einem ADSL-Verfahren verwendet wird,
- Figur 2: den Aufbau einer netzseitigen Anschlusseinheit, und
- Figur 3: Verfahrensschritte zum Initialisieren einer teilnehmerseitigen Anschlusseinheit.

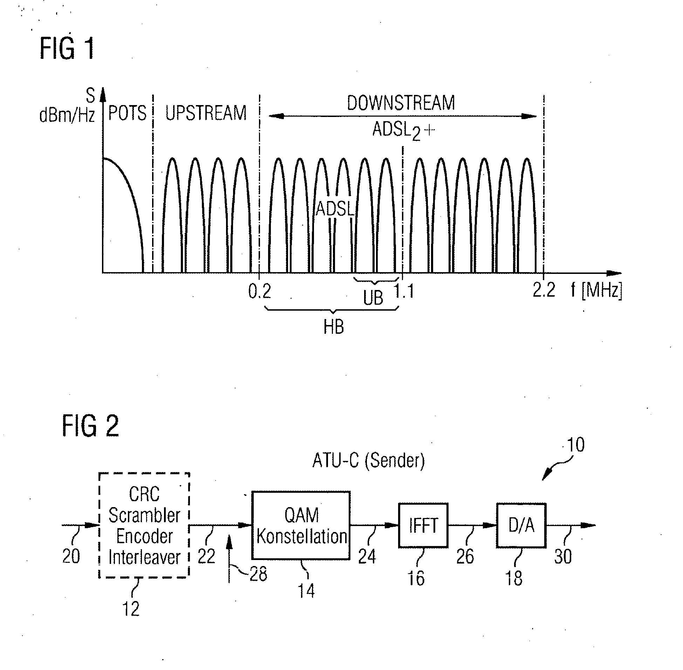

Figur 1 zeigt ein Koordinatensystem, auf dessen x-Achse die Frequenz in Megahertz abgetragen ist. Auf der y-Achse des Koordinatensystem ist dagegen die spektrale Leistungsdichte abgetragen, beispielsweise in dBm/Hz. In einem unteren Frequenzbereich, beispielsweise im Bereich bis zu 6 kHz oder bei ISDN (Integrated Services Digital Network) bis zu 150 MHz werden herkömmliche Telefondaten übertragen, beispielsweise in analoger oder in digitaler Form.

In einem Frequenzbereich von beispielsweise 20 kHz bis 0,2 MHz (Megahertz) werden mit Hilfe eines Mehrtonsignals Daten vom Teilnehmer zu einem Netzknoten übertragen. Diese Richtung wird auch Upstream-Richtung bezeichnet. In einem weiteren Frequenzbereich von beispielsweise 0,2 MHz bis 1,1 MHz findet eine Datenübertragung von dem Netzknoten zum Teilnehmer ebenfalls mit Hilfe eines Mehrtonsignals statt. Dieser Frequenzbereich wird auch als Downstream-Frequenzbereich bezeichnet. Im Folgenden ist dieser Downstream-Frequenzbereich ein Hauptfrequenzbereich HB aus dem ein Unterfrequenzbereich UB ausgenommen werden soll. Bei einem ADSL2+-Verfahren erstreckt sich der Downstream-Frequenzbereich beispielsweise von 0,2 MHz bis zu 2,2 MHz.

Bei anderen Ausführungsbeispielen liegen die Grenzen zwischen den Frequenzbereichen an anderen Stellen. Auch Überlappungen der Frequenzbereiche sind bei bestimmten Verfahren zulässig.

Im Ausführungsbeispiel wird angenommen, dass die beiden Tonsignale mit den größten Trägerfrequenzen im Downstream-Frequenzbereich HB nicht zur Datenübertragung verwendet werden sollen, beispielsweise um Störungen durch andere Übertragungen im selben Kabelbündel vorzubeugen. Die beiden auszublendenden Tonsignale liegen in einem Unterfrequenzbereich UB am oberen Ende des Hauptfrequenzbereichs HB. Bei anderen Ausführungsbeispielen sollen mehrere Teilbereiche im Haupt-Frequenzbereich HB ausgeblendet werden, d.h. insbesondere Teilbereiche, zwischen denen Bereiche liegen, in denen eine Upstream-Übertragung stattfindet.

Figur 2 zeigt eine netzseitige Anschlusseinheit 10, die auch als ATU-C (ADSL Transceiver Unit Central Office End) bezeichnet wird. Die Anschlusseinheit 10 befindet sich beispielsweise in einer Vermittlungsstelle eines durchschaltevermittelten Telefonnetzes oder in einem Netzknoten eines Datenpaketübertragungsnetzes, z.B. des Internets.

Die Anschlusseinheit 10 enthält:
- zu den in Figur 2 dargestellten Einheiten vorgelagerte Einheiten 12, beispielsweise eine Fehlercodiereinheit (Cyclic Redundancy Check), einen sogenannten Scrambler, Encodereinheiten, z.B. einen Reed-Solomon-Code-Encoder bzw. einen Trellis-Encoder, und einen Interleaver,
- eine QAM-Einheit (Quadrature Amplitude Modulation), die beispielsweise durch eine Tabelle realisiert ist, gemäß der Bitgruppen jeweils einem Realteil und einem Imaginärteil zugeordnet werden,
- eine IFFT-Einheit (Inverse Fast Fourier Transformation) zum Durchführen einer inversen schnellen Fouriertransformation,
   und
- einen Digital/Analog-Wandler.

Pfeile 20 bis 26 zeigen den Datenfluss in der Anschlusseinheit 10. Zu übertragende Bits werden durch die vorgelagerten Einheiten 12 bei der Übertragung von Nutzdaten bearbeitet. Bei der Durchführung des erfindungsgemäßen Verfahrens sind die vorgelagerten Einheiten 12 jedoch vorzugsweise ausgeschaltet. Somit wird eine zu übertragende Bitfolge, wie durch einen Pfeil 22 dargestellt, direkt in die QAM-Einheit eingegeben, wobei jedoch vorher, wie durch einen Pfeil 28 angedeutet, Werte mit einem Dämpfungsfaktor multipliziert werden, um bestimmte Frequenzbereiche zu unterdrücken.

Wie durch einen Pfeil 24 angedeutet, wird die aus der QAM-Einheit 14 ausgegebene Bitfolge dann einer inversen Fouriertransformation in der IFFT-Einheit 16 unterzogen. Die von der Einheit 16 ausgegebenen digitalen Daten werden in dem Digital/Analog-Wandler 18 in ein analoges Ausgangssignal umgewandelt, das dann über eine Anschlussleitung 30 zu einer Empfangseinheit ATU-R eines Teilnehmers TlnA übertragen wird.

Die in Figur 2 dargestellte Anschlusseinheit 10 lässt sich unter Verwendung eines Prozessors realisieren. Alternativ wird die Anschlusseinheit 10 jedoch auch ohne Prozessor als elektronische Schaltung realisiert.

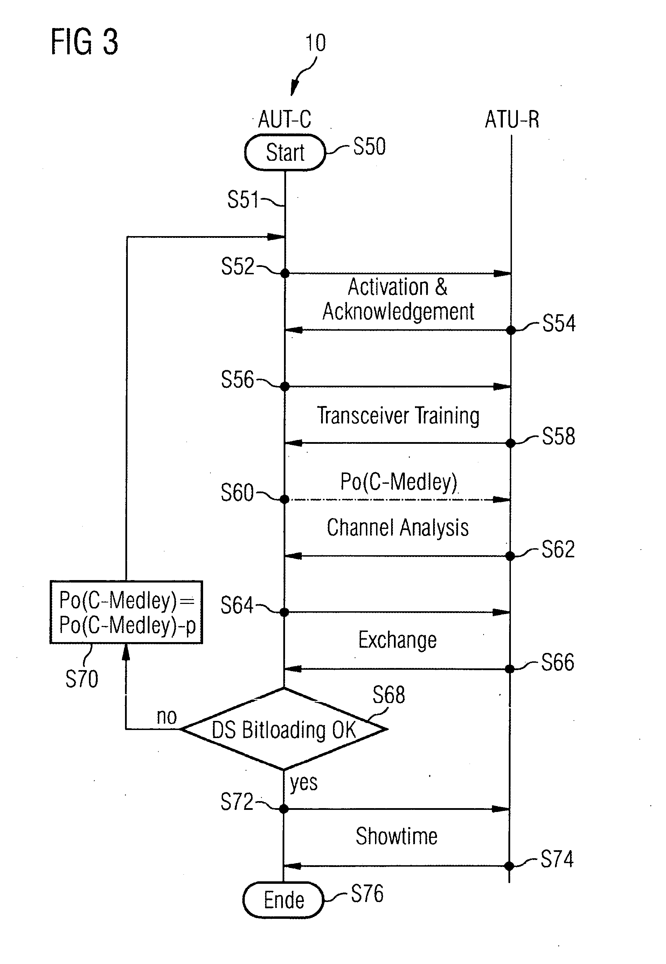

Figur 3 zeigt Verfahrensschritte, die beim Initialisieren der Anschlusseinheit 10 und einer teilnehmerseitigen Empfangseinheit ATU-R durchgeführt werden. Das Verfahren beginnt in einem Verfahrensschritt S50. In einem dem Verfahrensschritt S50 folgenden Verfahrensschritt S51 gibt eine Vorgabeeinheit den Unterfrequenzbereich UB als bei der Übertragung auszunehmenden Frequenzbereich vor, bspw. um Nebensprechen zwischen einander benachbarten Aderpaaren eines Aderbündels zu verringern.

In einem Verfahrensschritt S52 wird eine Signalisierung zwischen der Anschlusseinheit 10 und der teilnehmerseitigen Empfangseinheit ATU-R durchgeführt. Die Empfangseinheit des Teilnehmers antwortet in einem Verfahrensschritt S54. Bezüglich der Verfahrensschritte S52 und S54 wird beispielsweise auf den Standard ITU-T G 992.1 (06/99), Abschnitt 10.2, sowie den Standard ITU-T G.994.1 verwiesen.

In einem folgenden Verfahrensschritt S56 beginnt das Training mindestens einer adaptiven Filtereinheit in der teilnehmerseitigen Empfangseinheit ATU-R. In einem Verfahrensschritt S58 wird ein Training mindestens einer adaptiven Filtereinheit in der Anschlusseinheit 10 durchgeführt. Bezüglich der Verfahrensschritte S56 und S58 wird außerdem bspw. auf den Standard ITU-T G 992.1 (06/99), Kapitel 10, verwiesen.

Im ersten Ausführungsbeispiel wird nach dem Abschluss des Trainings in einem Verfahrensschritt S60 mit einer so genannten Kanalanalyse begonnen, bei der der Übertragungskanal von der Anschlusseinheit 10 zu der Empfangseinheit ATU-R charakterisiert werden soll. Dabei wird abweichend vom Standard ITU-T G.992.1 ein Signal verwendet, bei dem im Unterfrequenzbereich UB nur mit einer verringerten Signalleistung im Vergleich zu den übrigen Frequenzbereichen gesendet wird. Die teilnehmerseitige Empfangseinheit geht jedoch davon aus, dass das Signal C-MEDLEY gemäß Standard ITU-T G.992.1 gesendet worden ist und ordnet so die Absenkung des Signalbereichs einer Verschlechterung der Übertragungsstrecke zu. Abhängig von den Übertragungseigenschaften, die die Empfangseinheit ATU-R für den Frequenzbereich UB ermittelt hat, werden diesem Frequenzbereich eine verringerte Anzahl von Bits zugeordnet, im Vergleich zu einer ungedämpften Signalerzeugung im Unterfrequenzbereich UB.

In einem Verfahrensschritt S62 wird von der teilnehmerseitigen Empfangseinheit ATU-R ein Testsignal an die Anschlusseinheit 10 gesendet, woraufhin in der Sendeeinheit 10 in der Gegenrichtung die Kanaleigenschaft des Übertragungskanals ermittelt wird, beispielsweise die Impulsantwort unter Verwendung einer adaptiven Filtereinheit. Hierbei wird bspw. gemäß Standard ITU-T G 992.1.1 (06/99), Kapitel 10.7, vorgegangen.

In einem folgenden Verfahrensschritt S64 und in einem Verfahrensschritt S66 tauschen die Anschlusseinheit 10 und die Empfangseinheit ATU-R die bei der Kanalanalyse ermittelten Ergebnisse, insbesondere die Zuordnung von Bits zu den einzelnen Tonsignalen aus. Bezüglich der Verfahrensschritte S64 und S66 wird außerdem bspw. auf den Standard ITU-T G.992.1 (06/99), Kapitel 10.8 bzw. Kapitel 10.9, verwiesen.

In einem Verfahrensschritt S68 wird geprüft, ob für die Übertragungsrichtung von der Empfangseinheit ATU-R zu der Anschlusseinheit 10 im Unterfrequenzbereich UB Tonsignalen bzw. einem Tonsignal Bits zugeordnet worden sind. In diesem Fall wird die Zuordnung als noch nicht ausreichend angesehen und das Verfahren wird unmittelbar in einem folgenden Verfahrensschritt S70 fortgesetzt.

Im Verfahrensschritt S70 wird die Leistung im Frequenzbereich UB des Testsignals C-MEDLEY abgesenkt, beispielsweise um 1 dB. Anschließend wird das Verfahren im Verfahrensschritt S72 fortgesetzt. Das Verfahren befindet sich nun in einer Verfahrensschleife aus den Verfahrensschritten S52 bis S70. Die Verfahrensschleife wird so lange durchlaufen, bis im Verfahrensschritt S68 festgestellt wird, dass dem Frequenzunterbereich UB keine Bits mehr zugeordnet worden sind. In diesem Fall ist die Zuordnung der Bits zum Unterfrequenzbereich UB in Ordnung und dem Verfahrensschritt S68 folgt unmittelbar ein Verfahrensschritt S72. Im Verfahrensschritt S72 und in einem Verfahrensschritt S74 werden Nutzdaten zwischen der Anschlusseinheit 10 der Empfangseinheit ATU-R ausgetauscht, wobei im Unterfrequenzbereich UB keine Nutzdaten übertragen werden. Nach dem Übertragen der Nutzdaten wird das Verfahren in einem Verfahrensschritt S76 beendet. Die Nutzdaten sind bspw. Sprachdaten, Musikdaten, Bilddaten, Videodaten, Programmdaten usw.

Bei einem anderen Ausführungsbeispiel wird die Beeinflussung eines im Standard vorgegebenen Trainingssignals bereits im Verfahrensschritt S56 durchgeführt, beispielsweise bezüglich des im Standard G.992.1 (06/99), Kapitel 10.4, genannten Signals C-REVERB1, C-REVERB2, C-REVERB3 oder C-REVERB4. Durch diese Maßnahme lässt sich die Initialisierungszeit verkürzen.

Zusammenfassend gilt, dass unter anderem ein modifiziertes, standardkompatibles Initialisierungsverfahren für die Spektraloptimierung bei xDSL angegeben worden ist. Dabei ist davon ausgegangen worden, dass Nebensprechen bzw. Crosstalk eines der wichtigsten Probleme für die Weiterentwicklung der Breitbandanschlusstechnik ist. Durch Veränderungen des Sendespektrums lässt sich dem Nebensprechen entgegenwirken, wobei es jedoch zu Instabilitäten im Modemtraining auf der Teilnehmerseite kommen kann.

Bei der ADSL1-standardisierten Initialisierungsphase wird durch die Aussendung wohldefinierter Sendesignale beim Empfänger eine schnelle Konvergenz aller beteiligten adaptiven Filter erreicht, wobei besonders C-MEDLEY und C-REVERB erwähnt sein sollen. Die üblicherweise implementierten LMSartigen Algorithmen (Least Mean Square) sind für weitestgehend weiße Sendesignale gedacht, d.h. für Sendesignale, die über einen breiten Frequenzbereich eine gleichbleibende Spektralleistung haben. Deshalb werden viele Algorithmen bei wesentlichen spektralen Einschränkungen numerisch instabil. Nur aufwendige RLS-artige (Recursive Least Square) Algorithmen könnten dieses Problem empfangsseitig lösen. Jedoch müsste auch dann dem empfangsseitigen Modem implizit übermittelt werden, welcher Frequenzbereich von der Datenübertragung auszunehmen ist.

Die vorgeschlagenen Lösungen basieren auf einer amtsseitigen bzw. netzknotenseitigen Modifikation beim Training, beispielsweise beim ADSL-Training, und setzen keinerlei Änderung der CPE-Modem-Firmware (Customer Premises Equipment) voraus. Grundgedanke ist die Einschränkung des Downstream-Sendespektrums gegenüber dem CPE-Modem als Leistungsdämpfung darzustellen. Eine übergeordnete CO-seitige (Central Office) CPE-Adaptivitätslogik stellt sicher, dass das CPE-Modem wunschgemäß reagiert. Um die Konvergenz der adaptiven (Downstream-) Empfangsfilter FEQ (Frequency Domain Equalizer), TEQ (Time Domain Equalizer), EC (Echo Canceller) sicherzustellen, wird beispielsweise während der Phase "Transceiver Training" zunächst auf voller Bandbreite gesendet, während in der Phase "Channel Analysis" (Sendesignal C-MEDLEY beispielsweise) der Pegel nur im nicht erwünschten Downstreambereich sukzessive abgesenkt wird, d.h. aus dem weißen Rauschen wird ein sogenanntes farbiges bzw. färbiges Rauschen erzeugt. Sollte das CPE-Modem trotzdem Bits in den nicht erwünschten Bereich zuordnen, werden die Pegel von C-MEDLEY erneut abgesenkt. Das Verfahren führt insbesondere dann zum Erfolg, wenn die Einschränkung der Downstream-Bandbreite die erwünschte Bitrate beim sogenannten Waterfilling erlaubt, d.h. der Zuordnung von mehreren Bits zu einem Tonsignal. Diese Bedingungen lassen sich jedoch durch übergeordnete Steuerungen sicherstellen.

Wie anhand der Figuren erläutert worden ist, wird beispielsweise nur im Verfahrensschritt S60 eine Modifikation durchgeführt, die in Figur 2 durch den Pfeil 28 dargestellt ist. In Figur 3 steht Po (C-MEDLEY) für jenen Anteil der Leistung des vom CO ausgesendeten Downstream-MEDLEY-Signals, der im zu unterdrückenden Frequenzbereich liegt. "p" steht für die inkrementelle Leistungsabsenkung. Ein geeigneter Wert für p ist 1 dB (bzw. auch mehr als 1 dB, dann aber abhängig von der zurückgemeldeten Bitbelegung auf dem nicht erwünschten Unterfrequenzbereich UB). Beispielsweise liegt der Wert p im Bereich von 0,5 dB bis 2 dB, insbesondere im Bereich von 0,8 dB bis 1,2 dB.

Die erläuterte Vorgehensweise ist auch bei anderen Übertragungsverfahren anwendbar, insbesondere bei dem zukünftig eingesetzten ADSL2- bzw. ADSL2(+)-Linecards, da in der Regel CPE-Modems mittelfristig noch auf ADSL1 beschränkt sein werden.

Bei anderen Ausführungsbeispielen werden die hier erläuterten Verfahren auch für die umgekehrte Übertragungsrichtung durchgeführt. Bspw. wenn ein neueres ADSL Modem, das bspw. gemäß ADSL2 oder ADSL2+ arbeitet, auf eine ältere Linecard bzw. netzseitige Anschlusseinheit trifft, die bspw. nur gemäß ADSL1 arbeitet.

Erläutert wurde unter anderem ein Verfahren, bei dem durch Absenkung der spektralen Leistungsdichte in einem Unterfrequenzbereich UB einer Sende-/Empfangseinheit indirekt übermittelt wird, dass der Unterfrequenzbereich nicht für das Senden von Daten verwendet werden soll. Dieses Verfahren ist insbesondere für xDSL-Verfahren geeignet.

## Patentansprüche

1. Verfahren zur Datenübertragung über eine Teilnehmer-Übertragungsstrecke (30),
mit den Schritten:
- Vorgeben einer Referenzfolge und eines Referenzverfahrens zur Übertragung der Referenzfolge, wobei für die Übertragung der Referenzfolge ein Hauptfrequenzbereich HB vorgesehen ist,
- in dem Hauptfrequenzbereich HB Vorgeben (S51) mindestens eines ersten Unterfrequenzbereichs UB, der bei einer Nutzdatenübertragung über eine Übertragungsstrecke (30) nicht verwendet werden soll,
- in einem Sender (10) Erzeugen (S60) eines Testsignals mit einer spektralen Leistungsdichte ausgehend von der Referenzfolge und dem vorgegebenen Verfahren, ,
- Übertragen des Testsignals über die Übertragungsstrecke (30) von dem Sender (10) zu einem Empfänger (ATU-R),
- in dem Empfänger (ATU-R) Charakterisieren der Übertragungsstrecke (30) unter Verwendung des empfangenen Testsignals und unter der Annahme, dass das Testsignal aus der Referenzfolge und unter Verwendung des Referenzverfahrens erzeugt worden ist,
- abhängig von der Charakterisierung der Übertragungsstrecke (30) in dem ersten Unterfrequenzbereich UB Zuordnen im Empfänger einer Anzahl von in dem ersten Unterfrequenzbereich UB übertragbaren Bits zu dem ersten Unterfrequenzbereich UB,
- vom Empfänger (ATU-R) zum Sender (10) Übertragen (S66) eines Wertes, der die zugeordnete Anzahl von Bits angibt,
**dadurch gekennzeichnet,**
**dass** das Testsignal abweichend von der vorgegebenen Referenzfolge oder abweichend von dem vorgegebenen Referenzverfahren in dem ersten Unterfrequenzbereich UB mit einer im Vergleich zu den übrigen Frequenzbereichen verringerten Signalleistung vom Sender gesendet wird, und
**dass** die Schritte wiederholt werden, wobei die spektrale Leistungsdichte im Sender iterativ so lange verringert wird, bis vom Empfänger (ATU-R) der Wert Null übertragen wird.

2. Verfahren nach Anspruch 1, **dadurch gekennzeichnet, dass** die spektrale Leistungsdichte abgesehen von einem Rauschanteil abrupt auf den Wert Null verringert wird.

3. Verfahren nach einem der vorhergehenden Ansprüche, **dadurch gekennzeichnet, dass** zur Charakterisierung der Übertragungsstrecke (30) eine adaptive Filtereinheit verwendet wird, wobei die Filterkoeffizienten der Filtereinheit die Übertragungsstrecke (30) charakterisieren.

4. Verfahren nach einem der vorhergehenden Ansprüche, **dadurch gekennzeichnet, dass** das Testsignal in einem vom ersten Unterfrequenzbereich UB verschiedenen zweiten Unterfrequenzbereich des Hauptfrequenzbereichs HB eine größere spektrale Leistungsdichte hat als im ersten Unterfrequenzbereich UB.

5. Verfahren nach einem der vorhergehenden Ansprüche, **dadurch gekennzeichnet, dass** das Testsignal ein Mehrtonsignal ist,
wobei der erste Unterfrequenzbereich UB nur ein Tonsignal oder mehrere Tonsignale enthält, vorzugsweise mindestens fünf
Tonsignale.

6. Verfahren nach Anspruch 5, **dadurch gekennzeichnet, dass** bei der Übertragung der Nutzdaten auf mindestens einem Tonsignal mehr als ein Bit übertragen wird, vorzugsweise mittels QAM.

7. Verfahren nach einem der vorhergehenden Ansprüche, **dadurch gekennzeichnet, dass** das Testsignal eine mit einem Zufallsgenerator erzeugte Bitfolge enthält, insbesondere eine Folge C-REVERB oder C-MEDLEY gemäß einem xDSL-Verfahren.

8. Verfahren nach einem der vorhergehenden Ansprüche, **dadurch gekennzeichnet, dass** die spektrale Leistungsdichte durch Division eines im ersten Unterfrequenzbereich UB zu übertragenden Bitwertes durch einen Divisor verringert wird.

9. Verfahren nach einem der vorhergehenden Ansprüche, **dadurch gekennzeichnet, dass** anschließend Nutzdaten übertragen werden, insbesondere gemäß einem xDSL-Verfahren, insbesondere gemäß einem ADSL1-Verfahren.

10. Verfahren nach Anspruch 9, **dadurch gekennzeichnet, dass** das Verfahren in einer Vorrichtung ausgeführt wird, die in einer ersten Betriebsart gemäß einem ADSL1-Verfahren Daten überträgt und die in einer zweiten Betriebsart Daten gemäß ADSL2 bzw. ADSL2+ überträgt oder übertragen kann.

11. Vorrichtung zur Datenübertragung über eine Übertragungsstrecke mit Mitteln, die derart ausgestaltet sind, dass alle Schritte eines Verfahrens nach einem der Ansprüche 1 bis 10 ausgeführt werden können.

## Claims

1. Method for data transmission via a subscriber transmission link (30),
having the following steps:
- a reference sequence and a reference method for transmitting the reference sequence are prescribed, wherein a main frequency range HB is provided for transmitting the reference sequence,
- at least one first subordinate frequency range UB, which is not intended to be used for useful data transmission via a transmission link (30), is prescribed (S51) in the main frequency range HB,
- a test signal having a spectral power density is produced (S60) in a transmitter (10) on the basis of the reference sequence and the prescribed method,
- the test signal is transmitted via the transmission link (30) from the transmitter (10) to a receiver (ATU-R),
- the transmission link (30) is **characterized in** the receiver (ATU-R) by using the received test signal and on the assumption that the test signal has been produced from the reference sequence and using the reference method,
- the characterization of the transmission link (30) is taken as a basis in the first subordinate frequency range UB for allocating, in the receiver, a number of bits that can be transmitted in the first subordinate frequency range UB to the first subordinate frequency range UB,
- a value which indicates the allocated number of bits is transmitted (S66) from the receiver (ATU-R) to the transmitter (10),
**characterized in that**
the test signal, as a departure from the prescribed reference sequence or as a departure from the prescribed reference method, is sent by the transmitter in the first subordinate frequency range UB at a signal power which is reduced in comparison with the remainder of the frequency ranges, and
**in that** the steps are repeated, wherein the spectral power density is iteratively reduced in the transmitter until the receiver (ATU-R) transmits the value zero.

2. Method according to Claim 1, **characterized in that** the spectral power density apart from a noise component is reduced abruptly to the value zero.

3. Method according to either of the preceding claims, **characterized in that** the transmission link (30) is **characterized by** using an adaptive filter unit, wherein the filter coefficients of the filter unit characterize the transmission link (30).

4. Method according to one of the preceding claims, **characterized in that** the test signal has a greater spectral power density in a second subordinate frequency range, which is different from the first subordinate frequency range UB, of the main frequency range HB than in the first subordinate frequency range UB.

5. Method according to one of the preceding claims, **characterized in that** the test signal is a multitone signal, wherein the first subordinate frequency range UB contains only one tone signal or a plurality of tone signals, preferably at least five tone signals.

6. Method according to Claim 5, **characterized in that** when the useful data are transmitted on at least one tone signal more than one bit is transmitted, preferably by means of QAM.

7. Method according to one of the preceding claims, **characterized in that** the test signal contains a bit sequence produced using a random number generator, particularly a sequence C-REVERB or C-MEDLEY on the basis of an xDSL method.

8. Method according to one of the preceding claims, **characterized in that** the spectral power density is reduced by dividing a bit value that is to be transmitted in the first subordinate frequency range UB by a divisor.

9. Method according to one of the preceding claims, **characterized in that** subsequently useful data are transmitted, particularly on the basis of an xDSL method, particularly on the basis of an ADSL1 method.

10. Method according to Claim 9, **characterized in that** the method is carried out in an apparatus which transmits data on the basis of an ADSL1 method in a first mode of operation and which transmits or can transmit data on the basis of ADSL2 or ADSL2+ in a second mode of operation.

11. Apparatus for data transmission via a transmission link having means which are designed such that all the steps of a method according to one of Claims 1 to 10 can be carried out.

## Revendications

1. Procédé de transmission de données par l'intermédiaire d'un trajet de transmission d'abonné (30), comprenant les étapes consistant à :
- prédéterminer une séquence de référence et un procédé de référence pour transmettre la séquence de référence, dans lequel il est prévu pour la transmission de la séquence de référence une plage de fréquences principale HB,
- prédéterminer (S51) dans la plage de fréquences principale HB au moins une première sous-plage de fréquences UB qui ne doit pas être utilisée sur un trajet de transmission (30) lors d'une transmission de données de charge utile,
- générer (S60) dans un émetteur (10) un signal de test ayant une densité spectrale de puissance à partir de la séquence de référence et du procédé prédéterminé,
- transmettre le signal de test sur le trajet de transmission (30) de l'émetteur (10) à un récepteur (ATU-R),
- caractériser dans le récepteur (ATU-R) le trajet de transmission (30) en utilisant le signal de test reçu et en faisant l'hypothèse que le signal de test a été généré à partir de la séquence de référence et en utilisant le procédé de référence,
- en fonction de la caractérisation du trajet de transmission (30) dans la première sous-plage de fréquences UB, affecter dans le récepteur un nombre de bits pouvant être transmis dans la première sous-plage de fréquences UB à la première sous-plage de fréquences, UB,
- transmettre (S66) du récepteur (ATU-R) à l'émetteur (10) une valeur qui indique le nombre de bits affecté, **caractérisé en ce que**
le signal de test est émis dans le récepteur d'une façon différente de la séquence de référence prédéterminée ou d'une façon différente du procédé de référence prédéterminé dans la première sous-plage de fréquences basse UB avec une puissance de signal réduite par comparaison aux autres plages de fréquences, et
**en ce que** les étapes sont répétées, les densités spectrales de puissance étant réduites de manière itérative dans l'émetteur jusqu'à ce que la valeur nulle soit transmise par le récepteur (ATU-R).

2. Procédé selon la revendication 1, **caractérisé en ce que** la densité spectrale de puissance, à l'exclusion d'une composante de bruit, est brusquement réduite à la valeur nulle.

3. Procédé selon l'une quelconque des revendications précédentes, **caractérisé en ce qu'**une unité de filtrage adaptative est utilisée pour caractériser le trajet de transmission (30), les coefficients de filtrage de l'unité de filtrage caractérisant le trajet de transmission (30).

4. Procédé selon l'une quelconque des revendications précédentes, **caractérisé en ce que** le signal de test présente dans une seconde plage de fréquences de la plage de fréquences principale HB différente de la première sous-plage de fréquences UB une densité spectrale de puissance plus élevée que dans la première sous-plage de fréquences UB.

5. Procédé selon l'une quelconque des revendications précédentes, **caractérisé en ce que** le signal de test est un signal audio multiple, la première sous-plage de fréquences UB ne contenant qu'un seul signal audio ou de multiples signaux audio, de préférence au moins cinq signaux audio.

6. Procédé selon la revendication 5, **caractérisé en ce que** lors de la transmission des données de charge utile sur au moins un signal audio, plus d'un bit est transmis, de préférence par modulation QAM.

7. Procédé selon l'une quelconque des revendications précédentes, **caractérisé en ce que** le signal de test contient une séquence binaire générée par un générateur aléatoire, notamment une séquence C-REVERB ou C-MEDLEY conformément à un procédé xDSL.

8. Procédé selon l'une quelconque des revendications précédentes, **caractérisé en ce que** la densité spectrale de puissance est réduite par division par un diviseur d'une première sous-plage de fréquences UB en des valeurs binaires à transmettre.

9. Procédé selon l'une quelconque des revendications précédentes, **caractérisé en ce que** des données de charge utile sont ensuite transmises, notamment conformément à un procédé xDSL, et plus particulièrement, conformément à un procédé ADSL1.

10. Procédé selon la revendication 9, **caractérisé en ce que** le procédé est mis en oeuvre dans un dispositif qui transmet des données dans un premier mode de fonctionnement conformément à un procédé ADSL1 et qui transmet ou peut transmettre des données dans un second mode de fonctionnement conformément aux procédés ADSL2 ou ADSL2+.

11. Procédé de transmission de données sur un trajet de transmission à l'aide de moyens qui sont conçus de telle manière à pouvoir mettre en oeuvre toutes les étapes d'un procédé selon l'une quelconque des revendications 1 à 10.
